# EUROPEAN PATENT APPLICATION

(11) **EP 1 950 970 A1**
(43) Date of publication of application: **30.07.2008**
(21) Application number: 07119629.9
(22) Date of filing: 30.10.2007
(51) Int. Cl.: H04N 7/26, H04N 7/01

(54) **Image display apparatus for correcting motion compensation error and method thereof**

(30) Priority: 26.01.2007 KR 20070008278
(71) Applicant: Samsung Electronics Co., Ltd., Suwon-si, Gyeonggi-do 442-743 (KR)
(72) Inventor: Yoo, Tae-kwon, Yeongtong-gu, Suwon-si Gyeonggi-do (KR)
(74) Representative: D'Halleweyn, Nele Veerle Trees Gertrudis

(57) **Abstract**

An image display apparatus for correcting a motion compensation error and a method thereof are provided. The image display apparatus includes an image signal processing unit which detects a motion vector from an input image signal to determine a border region between a non-image display region and an image display region; and a controller which determines the kind of input images through a location information on the border region to control the image signal processing unit to compensate for and output a motion of the input image signal according to the kind of the input images.

## Description

### BACKGROUND OF THE INVENTION

### Field of the Invention

Apparatuses and methods consistent with the present invention relate to correcting a motion compensation error, and more particularly, to correcting an error on a screen caused by motion compensation of an input image.

### Description of the Related Art

In recent years, there has been an increasing use of image display apparatuses that display an image using a digital display system such as a plasma digital panel (PDP), a digital lighting processing (DLP) and a liquid crystal display (LCD). Therefore, a variety of algorithms have been developed to enhance a quality of the image displayed on the image display apparatus, and a motion compensation is among the algorithms.

One representative method for motion compensation is to estimate a motion level of an image through relevance to a previous frame or field, and a current frame or field to compensate for and output the current frame or field in order to process a signal of an input image. In addition to this method, there are various methods for motion compensation, and pixel values are recently mixed to compensate for and output a current frame or field in order to display an image motion on a screen more smoothly.

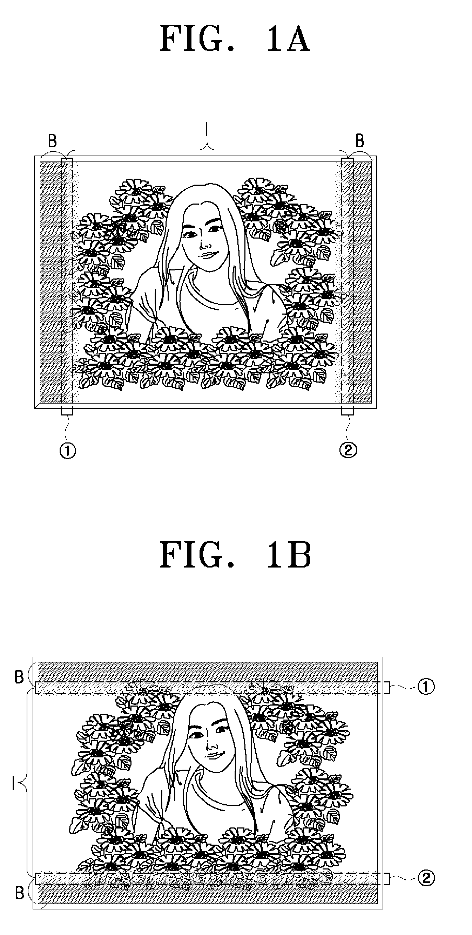

FIGS. 1a and 1b are diagrams illustrating a problem on a conventional image display apparatus.

As shown in FIGS. 1a and 1b, errors caused by the motion compensation appear in border regions ① and ② if an input image is operated in a 4:3 or letter box mode.

Referring to FIG. 1A, if the input image is operated in a 4:3 mode, a non-image display region (B) where an image is not displayed is present in left and right sides of the screen. The image display apparatus performs a motion compensation for an image display region (I) where an image is displayed and the non-image display region (B). A blur phenomenon of the image appears in the border regions ① and ② due to this motion compensation. That is, pixel values of the image display region (I) and the non-image display region (B) are mixed together in the procedure of mixing a pixel value to compensate for and output a current frame or field, leading to a motion compensation error.

Referring to FIG. 1B, if the input image is operated in a letter box mode, non-image display regions (B) where an image is not displayed are present in upper and lower sides of the screen, and a blur phenomenon of the image, that is, a motion compensation error appears in border regions ① and ② due to the motion compensation for the image display region (I) and the non-image display region (B).

This motion compensation error is caused by the non-image display region (B) where an image is not displayed being motion-compensated in the current frame or field in the same manner as the image display region (I). Therefore, quality of the image in the border regions ① and ② is deteriorated by means of the motion compensation if the input image is a kind of an image in which the non-image display region (B) is present, as in the 4:3 or letter box mode.

### SUMMARY OF THE INVENTION

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides an image display apparatus for correcting a motion compensation error by performing a motion compensation only for an image display region according to the kind of an input image in order to prevent a quality of the image from being deteriorated in a border region between a non-image display region where an image is not displayed and an image display region where an image is displayed, and a method thereof.

According to an aspect of the present invention, there is provided an image display apparatus comprising an image signal processing unit which detects a motion vector from an input image signal to determine a border region between a non-image display region where an image is not displayed and an image display region where an image is displayed; and a controller which determines the kind of input images through a location information on the border region to control the image signal processing unit to compensate for and output a motion of the input image signal according to the kind of the input images.

The image signal processing unit may determine, as the border region, a region where a region having a motion vector less than a certain value and a region having a motion vector greater than the certain value are adjacent to each other in at least one of vertical and horizontal directions of a screen.

The image signal processing unit may determine, as the border region, a region where the region having the motion vector less than the certain value and the region having the motion vector greater than the certain value are adjacent to at least a previously set region.

The border region may comprise a first border region where a region having a motion vector less than a certain value and a region having a motion vector greater than the certain value are adjacent to each other; and a second border region symmetric to the first border region.

The controller may determine the kind of the input images as one of a 4:3 mode and a letter box mode if the border region is determined to be resent in a region over the previously set frame.

The image signal processing unit may determine, as the border region, a region where a region having a motion vector of '0' and a region having a motion vector out of '0' are adjacent to each other in one of vertical and horizontal directions of a screen.

According to another aspect of the present invention, there is provided a method for correcting a motion compensation error, the method comprising detecting a motion vector from an input image signal to determines a border region between a non-image display region where an image is not displayed and an image display region where an image is displayed; determining the kind of input images through a location information on the border region; and compensating for and outputting a motion of the input image signal according to the kind of the input images.

The determining a border region may comprise determining, as the border region, a region where a region having a motion vector less than a certain value and a region having a motion vector greater than the certain value are adjacent to each other in at least one of vertical and horizontal directions of a screen.

The determining a border region may comprise determining, as the border region, a region where the region having the motion vector less than the certain value and the region having the motion vector greater than the certain value are adjacent to at least a previously set region.

The border region may comprise a first border region where a region having a motion vector less than a certain value and a region having a motion vector greater than the certain value are adjacent to each other; and a second border region symmetric to the first border region.

The determining a mode of input images may comprise the determining a mode of the input images as one of a 4:3 mode and a letter box mode if the border region is determined to be resent in a region over the previously set frame.

The determining a border region may comprise the determining, as the border region, a region where a region having a motion vector of '0' and a region having a motion vector out of '0' are adjacent to each other in one of vertical and horizontal directions of a screen.

### BRIEF DESCRIPTION OF THE DRAWINGS

The above and/or other aspects of the present invention will be more apparent by describing certain exemplary embodiments of the present invention with reference to the accompanying drawings, in which:

FIGS. 1A and 1B are diagrams illustrating a problem on a conventional image display apparatus;

FIG. 2 is a block diagram showing a schematic configuration of an image display apparatus according to an exemplary embodiment of the present invention;

FIG. 3A and FIG. 3B are diagrams illustrating an operation of the image display apparatus according to an exemplary embodiment of the present invention; and

FIG. 4 is a flowchart illustrating the operation of the image display apparatus according to an exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

In the following description, same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail.

The present invention enables a user to select a print density level, to thereby properly change a print density based on an amount of a developing agent loaded in the developer so that images of good quality can be obtained all the time.

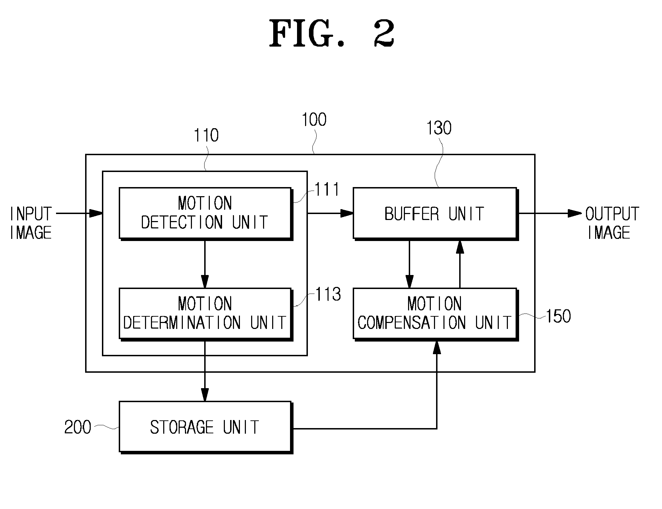

FIG. 2 is a block diagram showing a schematic configuration of an image display apparatus according to an exemplary embodiment of the present invention.

Referring to FIG. 2, the image display apparatus according to an exemplary embodiment of the present invention comprises an image signal processing unit 100 and a controller 200.

The image signal processing unit 100 detects a motion vector of each frame from an image signal corresponding to input images to determine a border region between a non-image display region where an image is not displayed and an image display region where an image is displayed. Further, the image signal processing unit 100 transmits a location information about the border region to a controller 200, and the controller 200 determines the kind of the input images through the location information about the border region to control an image signal processing unit 100 to compensate for and output a motion according to the kind of the input images.

The configuration of the image signal processing unit 100 will be described in more detail, as follows. The image signal processing unit 100 comprises a mode information provider 110, a buffer unit 130 and a motion compensation unit 150. Here, the mode information provider 110 comprises a motion detection unit 111 for detecting a motion vector from an image signal corresponding to the input images; and a border determination unit 113 for determining a border region using the detected motion vector. The border determination unit 113 determines, as the border region, a region where a region where a motion is not present and a region where a motion is present are adjacent to each other in a vertical or horizontal direction of a screen for the image signal.

That is, if a region having a motion vector of '0' and a region having a motion vector that is not '0' are adjacent to each other and are continuously adjacent to each other in a predetermined region in a vertical or horizontal direction of a screen for the image signal, the border determination unit 113 determines this predetermined region as the border region.

An operation of the border determination unit 113 will be described referring to one case that an input image is operated in a 4:3 mode. If a region having a motion vector of'0' and a region having a motion vector that is not '0' are adjacent to each other and are continuously adjacent to each other in a previously set region in a vertical direction of a screen, this region is determined as a first border region. Further, if a region having a motion vector of '0' and a region having a motion vector that is not '0' are adjacent to each other and are continuously adjacent to each other in a previously set region in a vertical direction from a point symmetric to the first border region, this region is determined as a second border region.

When the input image is operated in a letter box mode, if a region having a motion vector of '0' and a region having a motion vector that is not '0' are adjacent to each other and are continuously adjacent to each other in a previously set region in a horizontal direction of a screen, this region is determined as a first border region. In the same manner, if a region having a motion vector of'0' and a region having a motion vector that is not '0' are adjacent to each other and are continuously adjacent to each other in a previously set region in a horizontal direction from a point symmetric to the first border region, this region is determined as a second border region.

An image signal of one frame corresponding to the input images is temporarily stored in the buffer unit 130, and the motion compensation unit 150 performs a motion compensation for the image signal of one frame stored in the buffer unit 130, depending on the control of the controller 200.

The controller 200 determines whether the first border region and the second border region determined in the border determination unit 113 are present over the previously set frame, and then determines the input image to be operated in a 4:3 mode or a letter box mode if the first border region and the second border region are present over the previously set frame. Further, the controller 200 controls a motion compensation unit 150 to perform a motion compensation only for an image displayed between the first border region and the second border region by employing a location information of the first border region and the second border region.

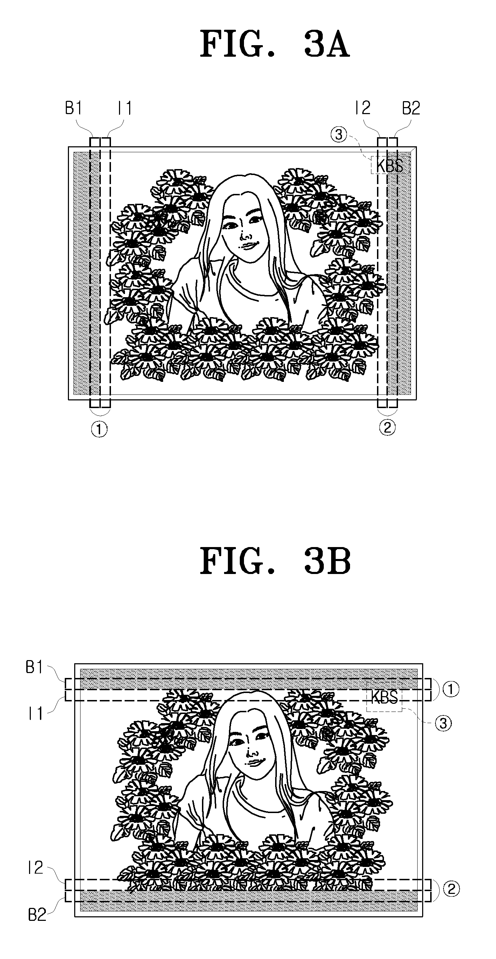

FIG. 3A and FIG. 3B are diagrams illustrating an operation of the image display apparatus according to an exemplary embodiment of the present invention.

Referring to FIG. 3A, the motion detection unit 111 detects a motion for an image signal of one frame and outputs a motion vector. Therefore, the border determination unit 113 determines whether or not a first image display region (I1) having a motion vector that is not '0' and a first non-image display region (B1) having a motion vector of '0' are adjacent to each other and are continuously adjacent to each other in a vertical direction. At this time, if the first non-image display region (B1) and the first image display region (I1) are continuously adjacent to each other in the previously set region, the border determination unit 113 determines the first non-image display region (B1) and the first image display region (I1) as a first border region ①.

For example, the border determination unit 113 determines whether or not the first non-image display region (B1) and the first image display region (I1) are continuously adjacent to each other in a range of 90 % of vertical or horizontal direction of the screen, and if a logo ③is overlapped between the first non-image display region (B1) and the first image display region (I1), this overlapped region is not determined to be a border region.

In the same manner, the border determination unit 113 determines whether or not a second border region ② is present in a point symmetric to the first border region ① That is, the border determination unit 113 determines whether or not a second image display region (12) having a motion vector that is not '0' and a second non-image display region (B2) having a motion vector of '0' are adjacent to each other and are continuously adjacent to each other in a vertical direction. At this time, if the second non-image display region (B2) and the second image display region (12) are continuously adjacent to each other in a region that is over a range of 90 % of vertical or horizontal direction of the screen, the border determination unit 113 determines the second non-image display region (B1) and the second image display region (I1) as a second border region ②.

Further, the controller 200 determines an input image to be operated in a 4:3 mode if the controller 200 determines the first border region ① and the second border region ② outputted from the border determination unit 113 are present over a previously set frame. Further, the controller 200 controls a motion compensation unit 150 to compensate for a motion of an image signal displayed between the first border region ① and the second border region ② by employing a location information of the first border region ① and the second border region ②.

In the case of the letter box as shown in FIG. 3B, the border determination unit 113 determines whether or not the first image display region (11) having a motion vector that is not '0' and the first non-image display region (B1) having a motion vector of '0' are adjacent to each other and are continuously adjacent to each other in a region. Further, the border determination unit 113 determines whether or not the second border region ② is present in a point symmetric to the first border region ①.

The controller 200 determines the input image to be operated in a letter box mode if the controller 200 determines the first border region ① and the second border region ② outputted from the border determination unit 113 to be present over the previously set frame, and controls a motion compensation unit 150 to compensate for a motion of the image signal displayed between the first border region ① and the second border region ②.

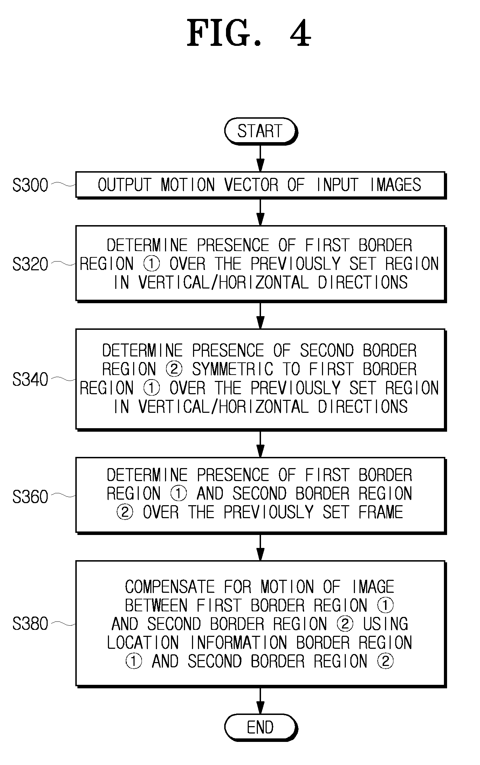

FIG. 4 is a flowchart illustrating an operation of the image display apparatus according to the exemplary embodiment of the present invention.

Referring to FIG. 4, at first, the motion detection unit 111 outputs a motion vector of an input image (S300). That is, the motion detection unit 111 detects a motion of an image signal in one frame and outputs a motion vector.

The border determination unit 113 determines whether or not a first border region ① is present over the previously set region in a vertical or horizontal direction (S320). That is, the border determination unit 113 determines whether or not a first image display region (I1) having a motion vector that is not '0' and a first non-image display region (B1) having a motion vector of'0' are adjacent to each other and are continuously adjacent to each other in a vertical or horizontal direction. At this time, if the first non-image display region (B1) and the first image display region (I1) are continuously adjacent to each other in the previously set region, the border determination unit 113 determines the first non-image display region (B1) and the first image display region (I1) as a first border region ①.

Further, the border determination unit 113 determines whether or not a second border region ② symmetric to the first border region ① is present over the previously set region in a vertical or horizontal direction (S340). That is, the border determination unit 113 determines whether or not a second image display region (I2) having a motion vector that is not '0' and a second non-image display region (B2) having a motion vector of '0' are adjacent to each other and are continuously adjacent to each other in a region. At this time, if the second non-image display region (B2) and the second image display region (I2) are continuously adjacent to each other in the previously set region, the border determination unit 113 determines the second non-image display region (B1) and the second image display region (I1) as a second border region ②.

The controller 200 determines whether or not the first border region ① and the second border region ② are present over the previously set frame (S360), and compensates for a motion of an image between the first border region ① and the second border region ② by employing location information of the first border region ① and the second border region ② (S380).

That is, the controller 200 determines a mode of the input image if the first border region ① and the second border region ② outputted from the border determination unit 113 are present over the previously set region, and controls a motion compensation unit 150 to compensate for a motion of the image signal displayed between the first border region ① and the second border region ②.

As described above, the image display apparatus performs a motion compensation, depending on the modes of the input image.

The exemplary embodiment of the present invention in which the motion vector is '0' has been described for detail illustration. However, if a region determined that there is no motion since it has a motion vector less than a certain value and a region determined that there is no motion since it has a motion vector greater than the certain value are adjacent to each other, these regions may be determined as a border region.

As described above, the image display apparatus according to an exemplary embodiment of the present invention may be useful to prevent a quality of the image from being deteriorated in a border region between the non-image display region where an image is not displayed and the image display region where an image is displayed, by determining a mode of input images and performing a motion compensation according to the determined mode.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. An image display apparatus, comprising:
an image signal processing unit which detects a motion vector from an input image signal to determine a border region between a non-image display region where an image is not displayed and an image display region where an image is displayed; and
a controller which determines a kind of the input image signal through a location information on the border region to control the image signal processing unit to compensate for and output a motion of the input image signal according to the determined kind of the input image signal.

2. The image display apparatus as claimed in claim 1, wherein the image signal processing unit determines, as the border region, a first region where a region having a motion vector less than a value and a second region having a motion vector greater than the value are adjacent to each other in at least one of vertical and horizontal directions of a screen.

3. The image display apparatus as claimed in claim 1, wherein the image signal processing unit determines, as the border region, a first region where a region having a motion vector less than a value and a second region having a motion vector greater than the value are continuously adjacent to each other in at least a previously set region in at least one of vertical and horizontal directions of a screen.

4. The image display apparatus as claimed in claim 1, wherein the border region comprises a first border region where a first region having a motion vector less than a value and a second region having a motion vector greater than the value are adjacent to each other; and a second border region symmetric to the first border region.

5. The image display apparatus as claimed in claim 1, wherein the controller determines the kind of the input image signal as one of a 4:3 mode and a letter box mode if the border region is determined to be present in a previously set frame.

6. The image display apparatus as claimed in claim 1, wherein the image signal processing unit determines, as the border region, a first region where a region having a motion vector of '0' and a second region having a motion vector that is not '0' are adjacent to each other in one of vertical and horizontal directions of a screen.

7. A method for correcting a motion compensation error, the method comprising:
detecting a motion vector from an input image signal to determine a border region between a non-image display region where an image is not displayed and an image display region where an image is displayed;
determining a kind of input image signal through a location information on the border region; and
compensating for and outputting a motion of the input image signal according to the determined kind of the input image signal.

8. The method as claimed in claim 7, wherein the determining a border region comprises determining, as the border region, a first region where a region having a motion vector less than a value and a second region having a motion vector greater than the value are adjacent to each other in at least one of vertical and horizontal directions of a screen.

9. The method as claimed in claim 7, wherein the determining a border region comprises determining, as the border region, a first region where a region having a motion vector less than a value and a second region having a motion vector greater than the value are continuously adjacent to each other in at least a previously set region in at least one of vertical and horizontal directions of a screen.

10. The method as claimed in claim 7, wherein the border region comprises a first border region where a first region having a motion vector less than a value and a second region having a motion vector greater than the value are adjacent to each other; and a second border region symmetric to the first border region.

11. The method as claimed in claim 7, wherein the determining the kind of input image signal comprises determining a mode of the input image signal as one of a 4:3 mode and a letter box mode if the border region is determined to be present in a previously set frame.

12. The method as claimed in claim 7, wherein the determining a border region comprises determining, as the border region, a first region where a region having a motion vector of '0' and a second region having a motion vector that is not '0' are adjacent to each other in one of vertical and horizontal directions of a screen.
